# EUROPÄISCHE PATENTSCHRIFT

(11) **EP 0 387 385 B1**
(45) Veröffentlichungstag und Bekanntmachung des Hinweises auf die Patenterteilung: **14.09.1994**
(21) Anmeldenummer: 89104808.4
(22) Anmeldetag: 17.03.1989
(51) Int. Cl.: H02H 3/16

(54) **Erdtrennklemme**
Earthing terminal cutoff relay
Relais de coupure pour une borne de terre

(43) Veröffentlichungstag der Anmeldung: 19.09.1990
(73) Patentinhaber: SIEMENS AKTIENGESELLSCHAFT, 80333 München (DE)
(72) Erfinder: Biller, Walter, Dipl.-Ing.(FH), D-8401 Köfering (DE); Denk, Theo, D-8401 Pentling (DE); Kandlbinder, Max, Dipl.-Ing. (FH), D-8414 Maxhütte (DE); Rösch, Helmut, Dipl.-Ing. (FH), D-8411 Eilsbrunn (DE)

(56) Entgegenhaltungen:
- EP-A- 0 133 501
- DE-C- 334 797
- DE-C- 342 144

## Beschreibung

Die Erfindung bezieht sich auf eine Erdtrennklemme für Netze mit eigener Betriebserde, die gegebenenfalls zusätzlich durch Trenntransformatoren gesichert sind, wobei die Betriebserde an einer trennbaren Klemme angeschlossen ist.

Üblicherweise spricht im Erdschlußfall ein vorgesehenes Sicherungsorgan an, worauf die Erdtrennklemme von Hand mittels Werkzeug geöffnet wird und man nach Auswechseln des Sicherungsorgans das Netz provisorisch wieder in Betrieb nimmt. Bei nächster geeeigneter Gelegenheit wird dann der Fehler gesucht und die Anlage wieder in ordnungsgemäßen Zustand versetzt. Erdschlüsse, die einen Strom kleiner als den Nennstrom des Sicherungsorgans zur Folge haben, können nicht erkannt werden.

Derartige Netze sind beispielsweise geerdete Steuerstromkreise, insbesondere hinter Steuertransformatoren. Eine Betriebsunterbrechung der geschilderten Art im Erdschlußfall ist in der Praxis - auch kurzzeitig - äußerst störend. Der Erfindung liegt die Aufgabe zugrunde, eine Erdtrennklemme zu entwickeln, die einen Erdschlußfall erkennt und selbsttätig die Betriebserde abschaltet.

Die Lösung der geschilderten Aufgabe besteht nach der Erfindung in einer Erdtrennklemme nach Patentanspruch 1. Diese weist eine Detektionseinrichtung für Ströme über die trennbare Klemme auf, die als Auslöser ausgeführt ist und auf Schaltmittel nach Art eines Schaltschlosses arbeitet. Das Schaltschloß steht mit Schaltkontakten der trennbaren Klemme in Wirkverbindung. Im Erdschlußfall erkennt die Detektionseinrichtung die über die trennbare Klemme fließenden Erdströme, die zum Öffnen der Schaltkontakte der trennbaren Klemme führen. Diese Klemme arbeitet also selbsttätig und es wird dabei die Versorgung des Netzes nicht unterbrochen. Die Auslösung erfolgt dabei auch bei Strömen, die kleiner als der Nennstrom des Schutzorgans sind.

Die Detektionseinrichtung kann mit einem Summenstromwandler arbeiten, durch den die Leiter eines Arbeitsstromkreises hindurchgeführt sind. An einer Sekundärwicklung des Summenstromwandlers ist dann ein Auslöser angeschlossen, der über ein Schaltschloß auf die Schaltkontakte der trennbaren Klemme arbeitet. Bei dieser Erdtrennklemme wird das Prinzip von Fehlerstromschutzschaltern genutzt, wonach das Residuum der Ströme im Arbeitsstromkreis so lange Null ist, wie über die trennbare Erdklemme keine Leckströme abfließen. Die Betriebserde bzw. die Ströme über die trennbare Klemme werden hierbei indirekt überwacht.

Die Erdtrennklemme kann vorteilhafterweise Schaltkontakte in galvanisch getrennten Hilfsstromkreisen aufweisen. Dadurch ist man in den Hilfsstromkreisen unabhängig von der Spannungshöhe und der Stromart.

Die Erfindung soll nun anhand von in der Zeichnung grob schematisch wiedergegebenen Ausführungsbeispielen näher erläutert werden:

In FIG 1 ist der Aufbau der Erdtrennklemme veranschaulicht.

In FIG 2 ist eine Erdtrennklemme mit einem Summenstromwandler als Detektionseinrichtung im Grundaufbau dargestellt.

In FIG 3 ist eine Erdtrennklemme nach FIG 2 mit Hilfsschaltern wiedergegeben.

In FIG 4 ist die Erdtrennklemme nach FIG 3 mit einem zusätzlichen Prüfstromkreis veranschaulicht.

In FIG 5 ist eine Erdtrennklemme nach FIG 4 mit zusätzlicher Anzeige durch Leuchtdioden dargestellt.

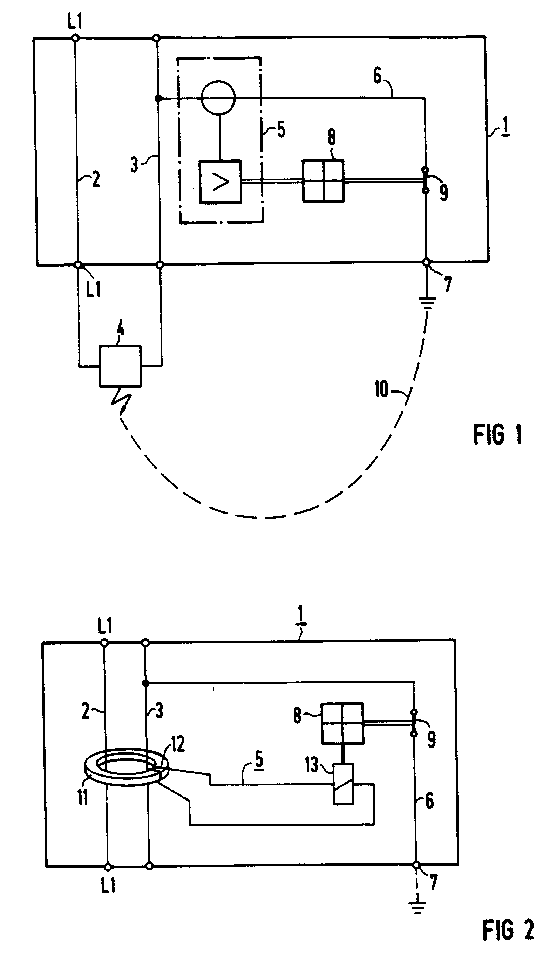

Die Erdtrennklemme 1 nach FIG 1 weist Leiter 2, 3 zum Anschließen eines Arbeitsstromkreises auf. Ein Verbraucher 4 kann an der Klemme L1 für den Außenleiter und an der weiteren Klemme für den Rückleiter angeschlossen werden. Eine Detektionseinrichtung 5 überwacht den Leiter 6 zur trennbaren Klemme 7, der mit dem Rückleiter 3 verbunden ist, darauf, ob Leckströme abfließen. Wenn die Detektionseinrichtung 5 zur Erde abfließende Ströme feststellt, wirkt sie über ein Schaltmittel 8 auf Schaltkontakte, im Ausführungsbeispiel der Schaltkontakt 9, öffnend ein. Wenn ein Verbraucher 4 Leckströme zur Erde ableitet schließt sich ein Erdkreis 10 zur trennbaren Klemme 7, so daß Leckströme auftreten.

Wenn die Erdtrennklemme 1 infolge eines Erdschlusses und der dadurch bedingten Leckströme abschaltet, kann der Verbraucher 4 provisorisch weiterbetrieben werden.

Die Erdtrennklemme 1 nach FIG 2 arbeitet mit einer Detektionseinrichtung 5, die einen Summenstromwandler 11, eine Sekundärwicklung 12 und einen Auslöser 13 aufweist, wie sie von Fehlerstromschutzschaltern bekannt sind. Das Schaltmittel 8 kann als Schaltschloß verstanden werden, das auf den Schaltkontakt 9 öffnend einwirkt. Die Detektionseinrichtung 5 bei der Erdtrennklemme nach FIG 2 erfaßt einen Stromfluß über die trennbare Klemme 7 indirekt, indem Leckströme hierüber ein Ungleichgewicht der hin- und rückfließenden Ströme durch die Leiter 2 und 3 des Arbeitsstromkreises verursacht und dieses Ungleichgewicht durch den Summenstromwandler und seinen Auslösekreis ausgewertet wird.

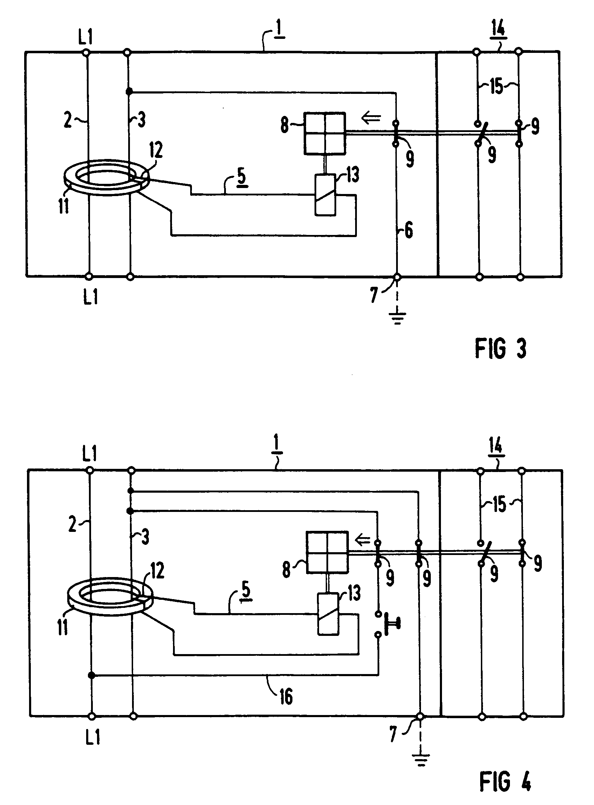

An der Erdtrennklemme 1 nach FIG 3 ist ein Hilfsschalter 14 angebaut, der weitere Schaltkontakte 9 aufweist in Hilfsstromkreisen 15.

Die Erdtrennklemme 1 nach FIG 4 weist einen zusätzlichen Prüfstromkreis 16 auf, um die Erdtrennklemme von Zeit zu Zeit auf Funktionstüchtigkeit überprüfen zu können, wie es bei Fehlerstromschutzschaltern üblich ist.

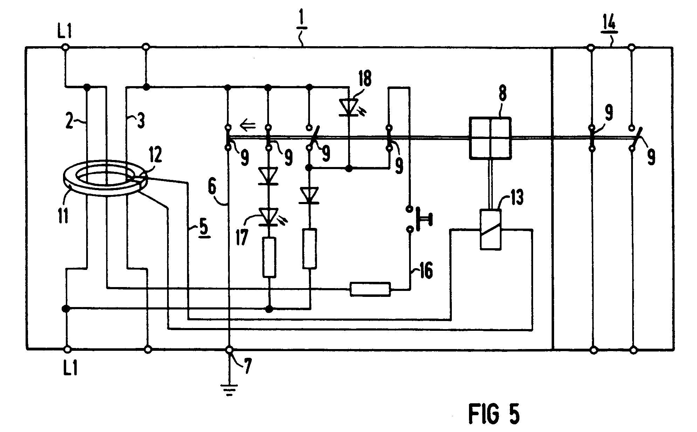

Bei der Erdtrennklemme nach FIG 5 sind zur Anzeige der jeweiligen Betriebszustände grüne Leuchtdioden 17 und rote Leuchtdioden 18 angeordnet. Die rote Leuchtdiode 18 wird vorteilhafterweise an Spannung gelegt, wenn die Erdtrennklemme die trennbare Klemme 7 getrennt hat.

Wenn also ein Erdschluß auftritt, wird durch die Erdtrennklemme die Betriebsverbindung zur Erde selbsttätig getrennt, worauf das Netz, beispielsweise eine Steuerung, ohne Unterbrechung vorübergehend ungeerdet weiterbetrieben werden kann, bis zu einer ordnungsgemäßen Überholung. Hierbei kann in der nächsten Betriebspause die Ursache des Erdschlusses beseitigt und die betriebsmäßige Verbindung zur Erde wieder hergestellt werden.

## Patentansprüche

1. Erdtrennklemme für Netze mit eigener Betriebserde, die gegebenenfalls zusätzlich durch Trenntransformatoren gesichert sind, wobei die Betriebserde an einer trennbaren Klemme (7) angeschlossen ist, **dadurch gekennzeichnet**, daß die Erdtrennklemme (1) eine Detektionseinrichtung (5) für Ströme über die trennbare Klemme (7) aufweist, die als Auslöser ausgeführt ist und auf Schaltmittel (8) nach Art eines Schaltschlosses arbeitet, das mit Schaltkontakten (9) der trennbaren Klemme (7) in Wirkverbindung steht.

2. Erdtrennklemme nach Anspruch 1, **dadurch gekennzeichnet**, daß die Detektionseinrichtung (5) mit einem Summenstromwandler (11) arbeitet, durch den die Leiter (2, 3) eines Arbeitsstromkreises hindurchgeführt sind, daß an einer Sekundärwicklung (12) des Summenstromwandlers (11) ein Auslöser (13) angeschlossen ist, der über ein Schaltschloß auf die Schaltkontakte (9) der trennbaren Klemme (7) arbeitet.

3. Erdtrennklemme nach Anspruch 1, **gekennzeichnet** durch Schaltkontakte (9) in galvanisch getrennten Hilfskontaktkreisen (15).

## Claims

1. An isolating earthing terminal for systems with their own system earth which are optionally additionally protected by isolation transformers, where the system earth is connected to an isolatable terminal (7), characterised in that the isolating earthing terminal (1) comprises a detection device (5) for currents flowing across the isolatable terminal (7), which detection device has the form of a tripping device and acts upon switching means (8) in the form of a breaker mechanism which is actively connected to switch contacts (9) of the isolatable terminal (7).

2. An isolating earthing terminal according to Claim 1, characterised in that the detection device (5) operates with a core-balance transformer (11) through which the conductors (2, 3) of an operating circuit extend, that a secondary winding (12) of the core-balance transformer (11) is connected to a tripping device (13) which acts via a switch lock upon the switch contacts (9) of the isolatable terminal (7).

3. An isolating earthing terminal according to Claim 1, characterised by switch contacts (9) in d.c.-decoupled auxiliary contact circuits (15).

## Revendications

1. Borne de coupure de raccordement à la terre pour des réseaux comportant une terre de service propre, qui sont éventuellement protégés en supplément par des transformateurs de séparation, la terre de service étant raccordée à une borne (7) pouvant être déconnectée, caractérisée par le fait que la borne (1) de coupure du raccordement à la terre possède un dispositif (5) de détection de courants passant par la borne (7) pouvant être déconnectée, qui est réalisé sous la forme d'un déclencheur et agit sur des moyens de commutation (8) à la manière d'un verrou de maintien, qui est relié, selon une liaison active, à des contacts de coupure (9) de la borne (7) pouvant être déconnectée.

2. Borne de coupure de raccordement à la terre suivant la revendication 1, caractérisée par le fait que le dispositif de détection (5) coopère avec un transformateur d'intensité somme (11), que traversent les conducteurs (2, 3) d'un circuit de travail, et qu'à un enroulement secondaire (12) du transformateur d'intensité somme (11) est raccordé un déclencheur (13), qui agit, par l'intermédiaire d'un verrou de commutation, sur les contacts de coupure (9) de la borne (7) pouvant être déconnectée.

3. Borne de coupure de raccordement à la terre suivant la revendication 1, caractérisée par des contacts de coupure (9) situés dans des circuits de contacts auxiliaires (15) séparés galvaniquement.
